# EUROPEAN PATENT APPLICATION

(11) **EP 4 749 289 A1**
(43) Date of publication of application: **27.05.2026**
(21) Application number: 24214852.6
(22) Date of filing: 22.11.2024
(51) Int. Cl.: G01N 35/00

(54) **A METHOD FOR CAUSING THE PREPARATION OF A SET OF QUALITY CONTROL, QC, SAMPLE CONTAINERS**

(71) Applicant: Beckman Coulter, Inc., Brea, CA 92821 (US)
(72) Inventor: NAETZER, Beate, 85604 Zorneding (DE)
(74) Representative: Paustian & Partner Patentanwälte mbB

(57) **Abstract**

The present invention relates to a method for causing the preparation of a set of Quality Control, QC, sample containers, wherein each QC sample container comprises a QC material for controlling the quality of at least a clinical test of a laboratory analyzer. The method comprises: obtaining, by a computing device, QC data comprising information specifying a set of QC sample containers to be prepared and, for each QC sample container of the set of QC sample containers, a respective volume of the QC material to be included in said each QC sample container; and causing at least a portion of a primary volume of QC material included in a primary QC sample container to be aliquoted, based on the QC data, into the QC sample containers of the set of QC sample containers.

## Description

The present disclosure relates to a method causing the preparation of a set of Quality Control, QC, sample containers.

Typically, Automated Laboratory Systems (ALSs) are assemblies comprising a plurality of components which allow for processing (e.g., testing) biological samples contained in respective sample containers. Sample containers are typically used for holding samples to be tested, e.g., biological samples (for instance blood samples) drawn from a human or animal subject.

The components may for example include at least one of pre-processing component (e.g., an input region for inserting sample containers in the ALS, a decapper, a centrifuge, an aliquoter), a processing component (e.g. for analysing a biological sample contained in the container) and a post-processing component (e.g., a storage unit for storing sample containers). Examples of transportation components comprise a track, a belt, and a carrier.

In particular, the processing components of the ALS may comprise an analytical instrument, e.g. a laboratory analyzer. The laboratory analyzer may be configured to carry out one or more clinical tests on the sample.

In order to control whether a laboratory analyzer works properly, quality control (QC) checks may be regularly performed on the laboratory instrument. Quality Control checks allow for monitoring s the accuracy, reliability, and precision of clinical test results produced by the analytic and clinical laboratories. In particular, quality control aims at identifying any errors or variations in the testing process, ultimately minimizing the risk of producing incorrect or misleading results.

For this purpose, a sample container contains a QC material with known characteristics. The laboratory instrument can be tested by processing the QC material. Based on the result of the clinical test carried by the laboratory analyser, it may be determined whether the laboratory instrument provides reliable test results.

Exemplarily, a quality control routine may be initiated when a trigger event occurs. The trigger event may e.g. be the fact that a certain number of clinical tests have been performed or that a certain amount of time has elapsed since the last quality control routine was performed or since the operations of the laboratory instrument have started.

When a Quality Control (QC) check on a clinical test becomes due, a user may manually prepare a sample container containing QC material, load the sample container into the laboratory instrument or into an input module of the ALS and initiate the performance of the clinical test. These operations are typically error prone and relatively time consuming. In particular, in case the number of laboratory analyzers and thus the number of required QC checks increases, these operations can become relatively time consuming.

A first aspect of the present disclosure refers to a method for causing the preparation of a set of Quality Control, QC, sample containers, wherein each QC sample container comprises a QC material for controlling the quality of at least a clinical test (herein also referred to as: test) of a laboratory analyzer. The method comprises:
- obtaining, by a computing device, QC data comprising information specifying a set of QC sample containers to be prepared and, for each QC sample container of the set of QC sample containers, a respective volume of the QC material to be included in said each QC sample container; and
- causing at least a portion of a primary volume of QC material included in a primary QC sample container to be aliquoted, based on the QC data, into the QC sample containers of the set of QC sample containers.

The method of the present disclosure allows for automating the preparation of QC sample containers. The method may thereby significantly enhance time efficiency by reducing the manual workload involved in preparing QC samples. Additionally, the method optimizes the use of QC material by enabling the aliquoter to precisely calculate the required volume of QC material for each test, thereby minimizing waste and ensuring that expensive QC materials are used more efficiently.

Moreover, the method of the present disclosure provides flexibility for laboratory users, allowing them for customizing the distribution of QC material according to their needs. For example, users may choose to create QC sample containers that hold enough material for an entire day's tests and/or for a plurality of laboratory analyzers or, alternatively, prepare smaller containers for individual tests and/or for a single laboratory analyzer. This flexibility improves operational management and resource allocation.

In particular, the method allows laboratory users for scheduling the preparation of QC sample containers according to the laboratory needs, e.g., the laboratory workload. For example, the QC sample containers can be prepared in advance during periods of relatively low workload. This proactive approach is particularly beneficial because it helps balance workloads and optimize resource use. By preparing QC sample containers ahead of time, e.g., during periods of relatively low workload, laboratories can reduce the pressure on staff and equipment during periods of high workload. This approach not only prevents bottlenecks when QC materials are urgently needed but also ensures that the QC sample containers are ready for immediate use when testing demands increase. Furthermore, this anticipation strategy improves workflow efficiency by leveraging downtime to complete routine, but essential, tasks like QC preparation. As a result, laboratories can maintain a more consistent pace of operations, preventing delays that could arise if QC materials had to be prepared on demand during high-traffic times.

The QC data may comprise information specifying a set of QC sample containers to be prepared and, for each QC sample container of the set of QC sample containers, a respective volume of the QC material to be included in said each QC sample container.

The QC data may comprise further information, such as at least one of: a QC sample identifier which identifies the primary sample container or the contained QC material, a lot of the QC material, a preparation date of the QC material, the type of QC material used, storage conditions (specifying on how the QC samples is to be stored, such as temperature), and an expiration date of the QC material. The QC data may further identify the clinical test(s) that may be QC checked by using the QC material, a schedule of the QC checks on the clinical test, that schedule specifying the laboratory analyzers which are configured to carry out the clinical test which can be QC checked by using the QC material and a frequency according to which the clinical test is to be QC checked.

Obtaining QC data may comprise accessing QC data, e.g., retrieving said data from a computer memory or a database, e.g. from the memory of the computing device. Retrieving the data may comprise downloading the data. Additionally, or alternatively, accessing the data may comprise receiving the data, e.g. from another computing device or a database. For instance, accessing the plurality of tests may comprise receiving the data, storing the data in the memory of the computing device and retrieving the data by accessing said memory.

The QC data may be received from e.g., a middleware software module or any other external computing device or software module. For example, obtaining the QC data may comprise automatically obtaining the QC data from the middleware software module. For instance, the QC data may be obtained by the computing device. It is also possible that the computing device is informed by the middleware software module that QC data are available. In response, the computing device may obtain the QC data e.g., by downloading them from a computer memory or a database.

Moreover, obtaining QC data may comprise determining the QC data, e.g. determining, by the computing device, the set of QC sample containers to be prepared and, for each QC sample container of the set of QC sample containers, a respective volume of the QC material to be included in said each QC sample container. For example, the computing device may obtain (e.g., download, access, and/or receive) information specifying the number of QC checks that shall be carried out in a specified time period on the clinical test from the middleware software module. Based on said information, the computing device may determine the cardinality of the set of QC sample containers (i.e., the number of QC sample containers which are to be prepared). Moreover, the computing device may obtain, for each QC sample container of the set of sample containers, a respective number of QC checks which should be performed on the clinical test by using the QC material in that QC sample container. For each QC sample container of the set of sample containers, the computing device may then determine, based on the respective number of QC checks and the volume of QC material needed to carry out one QC check, a respective volume of the QC material to be included in said each QC sample container.

Moreover, determining the QC data may comprise obtaining or determining one or more of the following information items: information specifying a number of laboratory analyzers that are configured to carry out the clinical test , information specifying a frequency according to which QC checks on the clinical test are to be carried out, information specifying a schedule according to which QC checks on the clinical test are to be carried out, information specifying a number of (and thus QC checks that have to be carried out on the clinical test in a predefined time period, and, information specifying a volume of QC material to be contained in each QC sample container. The cardinality (i.e., the number of elements) of the set of QC sample containers may be determined using one or more of the information items specified above.

For example, determining the QC data may comprise obtaining (e.g., downloading, accessing, and/or receiving) QC preparation information which may specify the information items above. Accordingly, based on the obtained QC preparation information the cardinality of the set of QC sample containers may be determined.

Causing QC material to be aliquoted may comprise transmitting instructions to an aliquoter of an Automated Laboratory System (ALS), said set of instructions instructing the aliquoter to aliquot the portion of the primary volume of QC material into the QC sample containers of the set of QC sample containers. This way, the computing device may cause the aliquoter to carry out the respective aliquotation. Causing QC material to be aliquoted may comprise aliquoting, by the aliquoter, the primary volume of QC material into the QC sample containers.

According to the present disclosure, causing an action to be carried out may comprise instructing e.g., a component of the ALS, to carry out that action. In particular, causing an action to be carried out may comprise initiating the action e.g., by instructing a component of the ALS, to carry out that action. Causing an action to be carried out may comprise carrying out the action. In particular, causing an action to be carried out may comprise or be implemented by a set of computer-readable instructions, e.g., stored in a memory of the computing device, which when executed by the computing device, cause the computing device to cause the respective action to be performed by the ALS.

For example, causing a primary volume of QC material included in the primary QC sample container to be aliquoted into the QC sample containers of the set of sample containers may comprise one or more of: instructing an aliquoter to aliquot that portion of the primary from the primary QC sample container into the QC sample containers of the set of sample containers, initiating the aliquoting of that portion from the primary QC sample container into the QC sample containers of the set of sample containers; and aliquoting, by an aliquoter of the ALS, that portion from the primary QC sample container into the QC sample containers of the set of sample containers.

The method of the present disclosure may be automated, i.e., it may be performed without human intervention by the computing device and/or by the ALS or its components.

The method of the present disclosure may be a computer-implemented method.

The QC sample containers of the set of QC sample containers may also be referred to as secondary sample containers.

The primary QC sample container may also be used for carrying out QC checks on the clinical test. Alternatively or additionally, the primary QC sample container may be kept, e.g. after aliquotation, in a storage unit, and e.g., used to generate further sets of QC sample containers, when those sets are required.

A set of Quality Control, QC, sample containers may comprise one or several QC sample containers, i.e., at least one QC sample container.

According to the present disclosure, an ALS may be an assembly comprising a plurality of components. The ALS may comprise a computing device operatively connected to those components and is configured to control each component. A component of the ALS may be a laboratory analyzer (i.e. an analytic instrument), a pre-processing (e.g. pre-analytic) instrument, a post-processing (e.g. post-analytic) instrument, an input module, an output module, a transportation component (e.g., a track, a belt, a tube carrier and the like), configured to move a sample container. In the following, "processing component" and "instrument" may be used interchangeably.

In particular, the transportation components may allow for moving containers from one laboratory instrument to another laboratory instrument or for moving containers from one component of a laboratory instrument to another component of the same laboratory instrument or to another component of another laboratory instrument. The automation components may include one or more tracks, one or more belts and/or container carriers configured to move biological samples contained in sample containers.

An analytic instrument (hereinafter referred to also as: "laboratory analyzer") may be configured to carry out at least a clinical test. The analytical instrument may include one or more pre-analysis, analysis, and post-analysis components.

An laboratory analyzer may be, in particular, configured to carry out one or more analytic steps, such as measuring one or more characteristics of a biological sample, e.g., the concentration of an analyte. The laboratory analyzer may include an immunoassay analyzer, a chemistry analyzer, and identification and antibiotic susceptibility analyzer, a bacteriology analyzer, a molecular analyzer, a hematology analyzer, a urinalysis instrument, and the like.

A pre-analysis laboratory instrument may be configured to carry out one or more pre-analytic steps on a biological sample to prepare the biological sample for the analytic instrument(s). A pre-analysis laboratory instrument may include or be a centrifuge, a decapper, a recapper, an input module and/or an aliquoter for preparing further sample containers containing each a portion of the biological sample. The method of the present disclosure may in particular cause pre-analytic steps (e.g., uncapping a sample container, aliquoting a part of the biological sample comprised in the sample container, (re)capping the sample container, and/or centrifuging the sample container) to be carried out.

A post-analysis laboratory instrument may be configured to carry out one or more post-processing steps on the biological sample after the biological sample has been processed by one or more laboratory analyzers. A post-analysis laboratory instrument may include one or more of a recapper (e.g., for putting caps back on containers), a storage unit, in particular a refrigerated storage unit, and an output module.

Both pre-analysis and post-analysis laboratory instruments may be referred to as peri-analytical laboratory instruments.

The QC material contained in a QC sample container may be a substance with known, predefined characteristics, e.g., analyte content, that is used to carry out a QC check on the clinical test, e.g., to assess the reliability of the results provided by the laboratory analyzer that performs that clinical test. In particular, the characteristics of the QC material provide a benchmark against which the results of the clinical test carried by the laboratory analyser on the QC material can be compared.

For example, the concentration or levels of key analytes or components contained in the QC material may be predefined, known, and e.g., provided by the manufacturer of the QC material. They represent the expected value that the instrument should detect when carrying out the clinical test on the QC material. Moreover, the QC materials may be configured to remain stable over time, meaning their properties do not change significantly under proper storage conditions. The QC materials may also be uniform, ensuring that each aliquot of the QC material contained in the set of QC sample containers is identical in composition. This eliminates variability and ensures that any difference in results is due to the instrument's performance, not inconsistencies in the QC material.

A QC sample container may be a sample tube. Typically, sample tubes comprise a closed tube end and an end opposite thereto. The latter end defines an opening for inserting the QC material in the sample tube. The opening may be closeable, e.g. sealable, by a cap. In general, a sample container may be configured to receive and hold a portion of a QC material. Accordingly, the sample container may comprise an opening for receiving the QC material and a bottom as well as one or more walls to hold the sample, wherein the opening may be configured to be releasably closed by a closing element, e.g. a cap. In particular, the QC sample container may have a substantially cylindrical shape (i.e. a cylindrical wall), with the opening at one base and the bottom at the opposite base.

When the QC material is processed by the laboratory analyzer, the analyzer may measure the characteristics (such as the concentration of specific analytes) and compares the measured values to the known target values of the QC material. If the analyzer results fall within the acceptable range or tolerance of the predefined values, it confirms that the analyzer is working properly. However, if the results deviate significantly from the expected range, it may indicate a problem with the instrument, such as calibration issues, sensor drift, or hardware malfunction. By using QC materials with known characteristics, laboratories can systematically monitor the performance of their instruments and ensure they are producing reliable results.

Causing the portion of the primary volume of QC material included in the primary QC sample container to be aliquoted may comprise one or more of:
- instructing, by the computing device, an aliquoter to aliquot, based on the QC data, the portion of the primary volume of QC material included in the primary QC sample container into the QC sample containers of the set of QC sample containers; and
- aliquoting, by the aliquoter and based on the QC data, the portion of the primary volume of QC material included in the primary QC sample container into the QC sample containers of the set of QC sample containers.

In particular, the computing device may first process the QC data, which specifies the set of QC sample containers and the volume of QC material to be aliquoted into each container. Based on this data, the computing device may send a set of instructions to the aliquoter of the ASL to carry out the aliquoting task. The instructions may specify, the number of QC sample containers into which the portion of the primary volume of QC sample is to be aliquoted and for each container of those QC sample containers, the amount of QC material that is to be transferred into said each container.

For example, the aliquoter may aliquote the portion of the primary volume of QC material included in the primary QC sample container into the QC sample containers of the set of QC sample containers, such that the set of QC sample containers is prepared.

After receiving the instructions from the computing device, the aliquoter may aliquot the portion of the primary volume of QC material into the QC sample containers of the set of sample containers. For example, for each sample container of the set of sample containers the aliquoter may aspirate the respective volume of the QC material to be included in said each QC sample container take the specified volume from the primary QC sample container and distributes it into said QC sample containers, following the amounts defined in the QC data. This step may be automated and allows for precise aliquoting across all containers.

The method of the present disclosure may further comprise causing the QC sample containers of the set of QC sample container to be capped, in particular screw capped.

Capping the QC sample containers after aliquoting reduces the risk of material evaporation and/or contamination. This way, the integrity and/or the quality of the QC materials are preserved e.g., for future use, thereby improving laboratory performance and quality control outcomes.

In particular, causing the QC sample containers to be capped may comprise one or more of: instructing a recapper of the ALS to recap those QC sample containers; initiating the recapping of those QC sample containers, e.g., by instructing the recapper of the ALS; and recapping, by the recapper of the ALS, those QC sample containers.

Causing the QC sample containers of the set of QC sample container to be capped may comprise one or more of:
- instructing, by the computing device, a recapper to cap the QC sample containers of the set of QC sample containers; and
- capping, by the recapper, the QC sample containers of the set of QC sample containers.

For instance, causing the QC sample containers to be capped may comprise transmitting, by the computing device, a respective set of instructions to a recapper of the ALS. For instance, the set of instructions may specify the QC samples containers that are to be recapped. In response, the recapper may recap the QC sample containers. This way, the computing device may cause the recapper to carry out the respective capping task. Causing the QC sample containers to be capped may comprise capping, by the recapper, the QC sample containers of the set of QC sample container. This automated step ensures that each container is properly sealed, preventing contamination or spillage, and maintaining the integrity of the QC material.

The method of the present disclosure may further comprise causing the QC sample containers of the set of QC sample containers to be stored in one or more storage units.

Causing the QC sample containers to be stored may comprise transmitting, by the computing device, a set of instructions to the ALS, the set of instructions instructing the ALS to store the QC sample containers in the one or more storage units. In response, the ALS may move the capped QC sample containers to the one or more storage units. Causing the QC sample containers to be stored may comprise selecting, by the computing device, the one or more storage units among a plurality of storage units, based e.g., by the availability of each storage unit of the plurality of storage units. The selection may also be based on the QC data, e.g. on the storage conditions of the AC material, as specified by the QC data. Accordingly, the computing device may cause the ALS to carry out the task storing the CC sample containers. In particular, the set of instructions may comprise information specifying, for each QC sample container of the set of sample containers, a respective storage unit of the one or more storage units, in which that QC sample container is to be stored.

In particular, causing the QC sample containers to be stored may comprise moving, by the ALS, e.g. by a transportation component of the ALS, the QC sample containers of the set of QC sample container to the one or more storage units.

Optionally, before causing the QC sample containers to be stored, the computing device may cause each QC sample container to be provided with a unique identifier, as described in more detail below. For example, the computing device may transmit a respective set of instructions to a tagging component, e.g., a printer, of the ALS and/or of the aliquoter. In response, the tagging component may, for each QC sample container of the set of sample container, print a respective label and attach that label to said each QC sample container, the respective label comprising a respective identifier which e.g., uniquely identifies said each QC sample container.

Causing the QC sample containers of the set of QC sample containers to be stored in one or more storage units may comprise one or more of:
- instructing, by the computing device, an automated laboratory system to store the QC sample containers of the set of QC sample containers in the one or more storage units; and
- storing, by the automated laboratory system, the QC sample containers of the set of QC sample containers in the one or more storage units.

For example, the computing device may first send a set of instructions to the ALS to store the QC sample containers in the one or more storage units. These instructions may specify the set of QC sample containers to be stored, the one or more storage units into which the QC sample containers are to be stored, and one or more storage conditions e.g., specifying the temperature of the range of temperature at which the QC material is to be stored). After receiving the instructions, the ALS may then perform the task of storing the QC sample containers in the one or more storage units. This step is automated, ensuring that the containers are placed in the correct environment to maintain the quality and stability of the QC material.

The method may further comprise:
- obtaining, by the computing device, primary QC material data,
- associating, by the computing device, the primary QC material data to each QC sample container of the set of QC sample containers.

For example, obtaining the primary QC material data may comprise accessing the primary QC material data, e.g., retrieving the primary QC material data from the middleware software component, e.g. based on the QC data. For example, the QC data may comprise a link to the primary QC material data. It is also possible that the primary QC sample container is equipped with an identifier. Retrieving the primary QC material data may comprise downloading the primary QC material data using the link or the identifier. In particular, the primary QC material data may also be comprised in the QC data. Hence, obtaining the QC data may comprise obtaining the primary QC material data.

The primary QC material data may comprise one or more of:
i. information specifying a type of QC material included in the primary QC sample container,
ii. information specifying a concentration level of an analyte in the QC material included in the primary QC sample container,
iii. information specifying a lot of the QC material, e.g., of the QC material comprised in the primary QC sample container,
iv. information specifying a preparation date of the QC primary sample container, and
v. information specifying an expiration date of the QC material included in the primary QC sample container.

For example, the type of QC Material may specify the nature and/or category of the QC material contained in the primary QC sample container. The type of QC material may ensure the QC material to be appropriate for testing the quality of the clinical test of the laboratory instrument.

The concentration level of an analyte may specify the known concentration of one or more analytes present in the QC material. Analytes could be chemical compounds, biomarkers, or other measurable elements. Information specifying the concentration level provides a target value against which the laboratory instrument's results are compared to assess accuracy and reliability.

The lot of the QC material may identify the batch of QC material from which the primary QC sample in the primary QC sample container originates. It may be a unique identifier assigned by the manufacturer to trace back the production history. Information specifying the lot of the QQC material allows for tracking consistency across different batches of QC material and ensures traceability in case of discrepancies or issues with a particular batch.

The preparation date may be the date when the primary QC sample container was prepared and filled with the QC material. It can help to determine the time interval in which the QC material in the QC primary sample container can be reliably used for QC checks and/or the expiration date of that material. Information specifying the preparation date allows for managing the storage and/or the usage of the material over time. In particular, the ALS may access this information to determine the time interval in which the portions of QC material in the QC sample containers of the set of sample containers can be reliably used for QC checks and/or to determine whether the portions of QC material in those QC sample containers are expired and shall be disposed.

The expiration date of the QC material may refer to the date after which the QC material should no longer be used. QC materials, like other chemical or biological samples, have a limited shelf life due to degradation or changes in their properties over time. In particular, the computing device may obtain the information specifying the expiration date and use that information to check whether the portions of the QC material in the QC sample container of the set of QC sample containers can be reliably used for QC checks and/or to determine whether the portions of QC material in those QC sample containers are expired and shall be disposed.

Exemplarily, the QC data may comprise information specifying one or more of the information items i. to v. mentioned above. In particular, obtaining the primary QC material data may comprise generating the primary QC material data using the QC data. For example, the computing device may access the QC data, retrieve the one or more of the information items i. to v. comprised in the AQC data and generate the primary QC material data by storing the information items i. to v. in the computer file that stores the primary QC material data..

Obtaining the primary QC material data may comprise accessing identification data, the identification data being included in an identifier comprised in the primary QC sample container and uniquely identifying the primary QC sample container and/or the QC sample comprised in the primary QC sample container, and accessing at least a portion of the primary QC material data by using the identification data.

Obtaining the primary QC material data may comprise accessing information specifying the primary QC sample container and/or the QC material comprised in the primary QC sample container comprised in the identification data. The identification data may be comprised in an identifier, such as a barcode, QR code, or RFID tag, which is physically attached to or integrated into the primary QC sample container.

When the automated laboratory system needs to retrieve the primary QC material data, the identifier attached to or integrated in the primary QC sample container may be scanned or read by a scanner of the ALS. The scanner may transmit the scanned information, i.e. the identifier to the computing device. This identifier may be unique to the primary QC sample container and/or may serve to access the information about that container and/or the QC material comprised in that container. In particular, the identifier may uniquely and unambiguously link the primary QC sample container with the primary QC material data, e.g. stored in a database.

For example, an ALS may use a primary QC sample container that contains a QC material with a known concentration of glucose for testing a glucose analyzer. The container has a barcode, which is scanned by the automated laboratory system. The barcode comprises or consists of the identifier that uniquely links the primary QC sample container to the primary QC material data. By scanning the barcode using e.g. the scanner described above, the computing device may access the information comprised in the primary QC material data, such as information specifying the type of QC material (glucose solution), the concentration level of glucose (e.g., 100 mg/dL), the lot number identifying the batch, the preparation date (e.g., October 10, 2024), and the expiration date (e.g., December 10, 2024).

Accordingly, the laboratory instrument may receive relevant information about the QC material used for preparing the QC samples in the QC sample containers of the set of sample containers, allowing the laboratory instrument to properly compare the test results against the known characteristics of the QC material. The identification data allows for automatically and uniquely linking the primary AC sample container with the relevant QC data (i.e., the primary QC material data), thereby reducing the risk of errors in quality control processes.

Obtaining the primary QC material data may comprise causing at least a portion of the QC primary material data to be acquired from the identifier comprised in, attached to, and/or integrated in the primary QC sample container, the identifier comprising the portion of the QC primary material data.

The identifier may uniquely and unambiguously identify the contained QC material.

Causing the at least a portion of the primary QC material data to be acquired may comprise sending, by the computing device, a request to e.g. a scanner, which in response reads the identifier and transmits the portion of the primary QC material data to the computing device.

The method may further comprise assigning to each QC sample container of the set of QC sample containers a respective identifier.

Accordingly, the computing device may determine, for each QC sample container of the set of QC sample containers, the respective identifier. For example, the respective identifier associated with a QC sample container may comprise a main identifier and a respective suffix and/or a respective prefix, e.g., the main identifier being the identifier comprised in, attached to, and/or integrated in the primary QC sample container.

For instance, for each QC sample container of the set of QC sample container, the respective identifier may be generated by appending a respective suffix and/or by prepending a respective prefix to the main identifier. for each QC sample container of the set of QC sample containers, the respective identifier is such that it differs from the respective identifiers assigned to the other QC sample containers of the set of QC sample containers. In particular, for each QC sample container of the set of QC sample containers, the respective suffix and/or suffix may be chosen so that it differs from the respective suffixes and/or prefixes assigned to the other QC sample containers of the set of QC sample containers. The identifier may be in the form of an alphanumeric string (e.g. a number) and e.g., may be stored in a database.

For example, if the main identifier for the primary QC sample container is "QC12345," the computing device may append different suffixes to the QC sample containers in the set, creating identifiers like "QC12345-01," "QC12345-02," and so on. In particular, each QC sample container of the set of sample containers is linked to the respective identifier which e.g., may be stored in the database.

For each QC sample container of the set of sample containers, the respective identifier may be comprised in a respective indicium, such as a respective barcode, a respective QR code, or a respective RFID tag. In particular, the respective indicium may be comprised in, attached to, and/or integrated in that each QC sample container.

In particular, the method of the present disclosure may comprise, for each QC sample container of the set of sample containers, generating, by the computing device, the respective identifier and causing, by the computing device, a printer to print the respective barcode and/or the respective QR code and to attach the respective barcode and/or the respective QR code to that QC sample container. The method of the present disclosure may comprise, for each QC sample container of the set of sample containers, printing, by the printer, the respective barcode and/or the respective QR code and attach the respective barcode and/or the respective QR code to that QC sample container.

This enables easy scanning and tracking of each QC sample container of the set throughout the ALS. In particular, when a QC sample container of the set of sample containers is scanned, the ALS and/or the computing device may retrieve the respective identifier and access relevant information on that QC sample container, e.g., stored in the database, ensuring accurate management and traceability of the QC sample containers in the set.

For instance, for each QC sample container of the set of sample containers, the respective identifier may comprise one or more of:
∘ information uniquely identifying said each QC sample container,
∘ information for accessing at least a portion of the primary QC material data, e.g., the portion of primary QC material data described above and/or the QC material data; and
∘ at least a portion of the primary QC material data e.g., the portion of primary QC material data described above and/or the primary QC material data.

For example, for each QC sample container of the set of sample containers, the respective identifier may comprise the main identifier which may comprise the portion of primary QC material data and/or information for accessing the portion of the primary QC material data.

The method may further comprise causing, e.g., based on the QC data, the primary QC sample container to be transferred to an aliquoter.

Causing the primary QC sample container to be transferred may comprise transmitting, by the computing device, a respective set of instructions to the ALS, the set of instructions instructing the ALS to transfer the primary QC sample container to the aliquoter Causing the primary QC sample container to be transferred may comprise selecting, by the computing device, the aliquoter among a plurality of aliquoters, based e.g., by the availability of each aliquoter of the plurality of aliquoters.

The step of causing the primary QC sample container to be transferred to an aliquoter may precede or be part of the step of causing the at least one portion of a primary volume of QC material to be aliquoted. In particular, causing the at least a portion of a primary volume of QC material to be aliquoted comprises causing the primary QC sample container to be transferred to an aliquoter.

Causing the primary QC sample container to be transferred may further comprise transferring the primary QC sample container to the aliquoter, e.g. by a transportation component (a track, a belt, a tube carrier and the like) of the ALS.

The method may further comprise causing the preparation, according to a preparation schedule, of a plurality of sets of QC sample containers, wherein each QC sample container of each set of the plurality of sets of QC sample containers may comprise a respective portion of the QC material for controlling the quality of the at least a test of the laboratory analyzer wherein the plurality of sets of QC sample containers may comprise the set of QC sample containers.

For example, Causing the preparation of the plurality of sets of sample containers may comprise one or more of:
∘ causing at least a portion of the primary volume of QC material included in the primary QC sample container to be aliquoted, based on the QC data, into the QC sample containers of each set of the plurality of sets of QC sample containers;
∘ causing the QC sample containers of each set of the plurality of sets of QC sample container to be capped, and
∘ causing the QC sample containers of each set of the plurality of sets of QC sample containers to be stored in one or more storage units.

The preparation of QC sample containers may be organized according to a defined schedule, which herein may be referred to as: the "preparation schedule." This schedule may specify when and how each set of the sets of QC sample containers are to be prepared, ensuring that those sets are available at the right times for QC checks.

The preparation schedule may in particular comprise or consist of a timeline that specifies the creation of each set of the plurality of sets of QC sample containers. For example, the QC activities of a laboratory may require new QC sample containers to be prepared weekly or monthly, depending on a frequency of the QC checks on the clinical tests and the stability of the QC material. If this is the case, in particular, the preparation schedule is defined so that QC sample containers are ready and available for the scheduled QC checks, thereby allowing for timely QC checks.

For instance, if a laboratory analyzer is used daily, the preparation schedule may specify that a set of QC sample containers is to be prepared at the start of each week according to the method of the present disclosure. This could in particular involve automatically aliquoting QC material into containers, labeling each container with a respective identifier, and storing them for later use.

The preparation schedule may be determined, by the computing device, based on the QC data. For example, the QC data may comprise time information, as described below. Based on said time information, the computing device may determine the preparation schedule.

The QC data may comprise time information, the time information specifying a time and/or date by which the QC sample containers of the set of QC sample containers is to be stored in the one or more storage units. Exemplarily, the method may comprise scheduling, by the computing device according to the time information, one or more of: aliquoting the portion of the primary volume of the QC material included in the primary QC sample container, capping the QC sample containers of the set of QC sample containers, and storing the QC sample containers of the set of QC sample containers in the one or more storage units. The time information may specify a specific time and/or date by which the QC sample containers should be stored in one or more storage units. This time information allows for ensuring that the QC sample containers are prepared and stored within the necessary time frame.

For example, the computing device may use the time information to schedule one or more step steps of the process. For instance, based on the time information, the computing device may: cause the at least one portion of the primary volume of QC material included in the primary QC sample container to be aliquoted, based on the QC data, into the QC sample containers of the set of QC sample containers; cause the QC sample containers of the set of QC sample container to be capped, and/or cause the QC sample containers of the set of QC sample containers to be stored in one or more storage units. Each of those steps may be scheduled in such a way that they are carried out so that the QC sample containers are ready and stored by the required deadline.

For instance, if the time information comprised in the QC data specifies that the sample containers is to be stored by 5:00 p.m. on a certain day, the computing device may ensure that the aliquoting and capping tasks are completed earlier in the day, say at 1:00 p.m., thereby allowing enough time for the containers to be transferred to the one or more storage units. In particular, the method of the present disclosure may be fully automated, with the computing device handling the entire workflow based on the timing specified in the QC data.

This approach may help laboratories maintain a smooth and efficient workflow, ensuring that the QC materials are always prepared, processed, and stored on schedule for quality control testing.

Obtaining the QC data may comprise determining, by using QC preparation information, the set of QC sample containers to be prepared and/or, for each QC sample container of the set of QC sample containers, the respective volume of the QC material to be included in said each QC sample container. The QC data may for example comprise the QC preparation information.

The preparation information may specify how many QC sample containers are needed for the set and, for each QC sample container, the volume of QC material to be added. The computing device may rely on this information to guide the preparation process. For example, the QC preparation information may indicate that a set of ten QC sample containers is required and that each QC sample container should hold 5 mL of material. The computing device may use this information to determine both the number of QC sample containers needed, i.e., the cardinality of the set of containers, and the volume to be allocated to each container of the set of sample containers. This allows the ALS to automate the preparation process, ensuring that the correct number of containers is filled with the proper amounts of QC material.

This approach may help ensure consistency and accuracy in the preparation of QC sample containers, following the guidelines provided by the QC preparation information.

For example, the QC preparation information may specify one or more of:
∘ a frequency at which the quality of the clinical test of the laboratory analyzer is to be monitored using the QC material,
∘ a QC schedule according to which the quality of the clinical test of the laboratory analyzer is to be monitored using the QC material,
∘ the laboratory analyzer, and
∘ the clinical test of the laboratory analyzer.

The QC preparation information may help determine how and when the QC material is used to monitor the quality of tests performed by a laboratory analyzer. This information may specify how frequently the quality of the analyzer's test should be checked, as well as the QC schedule that outlines when these checks should occur. It may also identify which specific analyzer is involved and the type of test being monitored.

For example, the QC schedule may indicate that the clinical test carried of the laboratory analyzer is to be monitored for quality, i.e., a QC check on the clinical test is to be carried out, every 24 hours or after every 100 clinical tests carried out on biological samples of individuals. The QC schedule may further specify that QC checks need to be done e.g. at the end of or at night of each workday. This helps the computing device to determine the number of QC sample containers required based on the frequency and schedule of testing.

The QC preparation information may also specify the laboratory analyzer that comprises the clinical test, the quality of which is to be monitored by using the QC material. Alternatively or in addition, the QC preparation information may specify the clinical test, the quality of which is to be monitored by using the QC material, such as glucose level measurement or protein analysis.

For each QC sample container of the set of QC sample containers, the respective volume of the QC material may be determined based on the clinical test and on the number of QC checks that are to be carried out by using said each QC sample. For instance, if a glucose test requires 2 ml of QC material per QC check and each QC sample container is to be used for three QC checks on the clinical test, the respective volume is at least 6 ml. e.g., 6ml plus the dead volume.

The QC preparation information may also specify the total volume of QC material needed for the entire QC monitoring process, i.e., the total volume of QC material needed to carry out a scheduled plurality of Qc checks on the clinical test. This way the ALS prepares the correct number of QC sample containers with the appropriate volume of QC material to carry out the scheduled QC checks. By integrating the frequency, schedule, and test details, the system can automate the preparation of QC samples, thereby increasing the accuracy and/or efficiency of the QC monitoring process.

In one example, the volume of QC material contained in each QC sample container of the set of sample containers may be the same of the volume of QC material included in each of the other QC sample containers of the set of QC sample containers. Alternatively, the QC sample containers of the set of sample container may contain volumes of QC material which differ from one another. The computing device may determine the necessary volume of QC material for each container by analyzing the QC data.

Exemplarily, the QC schedule may be based on one or more of: a biological sample testing schedule according to which the clinical test of the laboratory analyzer is to be carried out on biological samples of subjects, e.g., such that the biological sample testing schedule is prioritized, e.g., over the QC schedule, and an estimate of the workload of the laboratory instrument, e.g., of the clinical test of the laboratory instrument.

For instance, the biological sample testing schedule may specify the time intervals within a given time period, in which the clinical test is to be performed on biological samples of subjects.

For example, the biological sample testing schedule may be prioritized over the QC schedule to reduce or avoid disruption of the testing of biological samples of subjects. For example, the QC schedule may be such that no QC checks are carried out in the time intervals in which, according to the biological sample testing schedule, biological samples of subjects are to be tested. For instance, the QC schedule may be such that, if the frequency of QC tests requires a QC check to be carried out a predefined amount of time (say 5, 10, or 15 minutes) before the starting of a time interval in which biological samples of subjects are to be tested, that QC check is scheduled 5 minutes before that time interval. For example, the QC schedule may be such that, if the frequency of QC tests requires a QC check to be carried out a predefined amount of time (say 5, 10, or 15 minutes) before the ending of a time interval in which biological samples of subjects are to be tested, that QC check is scheduled 5 minutes after that time interval.

The QC schedule may be based on the biological sample testing schedule for biological samples, so that the schedule of the QC checks on the clinical tests is aligned with schedule for testing biological samples of subject, with those biological samples taking priority.

For example, if a laboratory plans to run the clinical test on biological samples of subjects at specific times throughout the day, such as in the morning and afternoon, the QC checks may be scheduled around these testing times. The QC schedule could be set to perform QC checks before the clinical test is carried out on biological samples of subjects, thereby ensuring that the clinical test provides reliable results before processing those biological samples. However, if there is a high volume of biological samples at certain times, the biological sample testing schedule may be prioritized, and the QC checks may be adjusted accordingly to minimize or avoid disruption of the testing of biological samples of subjects.

The estimate of the workload of the laboratory instrument, e.g., of the clinical test of the laboratory instrument, may specify how the workload of the laboratory instrument, e.g., of the clinical test of the laboratory instrument is expected to vary in a given time period (e.g., a given day of the week, a week, a month, and the like.) The estimate of the workload of the laboratory instrument, e.g., of the clinical test of the laboratory instrument may be determined by using historical data of the workload of the laboratory instrument, e.g., of the clinical test of the laboratory instrument in the given time period. For instance, if the estimate workload of the laboratory instrument, e.g., of the clinical test of the laboratory instrument, specifies how the workload of the laboratory instrument, e.g., of the clinical test of the laboratory instrument, is expected to vary on Mondays, that estimate is obtained by using historical data of the workload of the laboratory instrument, e.g., of the clinical test of the laboratory instrument, recorded on several Mondays.

In particular, a biological sample may be a sample of a bodily fluid of a human or animal subject. For example, the bodily fluid may be a physiological fluid, such as blood, saliva, urine, sweat, amniotic fluid, cerebrospinal fluid, ascites fluid, or the like. The biological sample may comprise one or more components that may potentially comprise analytes of interest for performing at least one clinical test. For instance, blood serum, blood cells and blood plasma are components of a blood sample. Typically, the biological sample may be put into a sample container.

A clinical test may comprise one or more procedures that, when carried out on the biological sample of a subject or on a QC sample, allow for estimating the value of a parameter, e.g. a clinical parameter. In particular, a clinical test may comprise physical, biological, optical, mechanical, immunological, and/or chemical procedures.

Exemplarily, an automated laboratory system processes a biological sample included in a sample container by causing the sample container to travel within the automated laboratory system by using the transportation means of the automated laboratory system so that a subset of the instruments of the automated laboratory system can carry out the pre-analytical, analytical, and post-processing steps needed to perform the clinical tests in the test order associated with the biological sample.

The method may further comprise causing, e.g., by the computing device, the quality of the clinical test of the laboratory analyzer to be monitored by using a QC sample container of the set of QC sample containers.

For example, the computing device may cause the quality of the clinical test of the laboratory analyzer to be monitored by using a QC sample container of the set of QC sample containers according to the QC schedule.

Causing the quality of the clinical test of the laboratory analyzer to be monitored by using a QC sample container of the set of QC sample containers may comprise instructing the ALS, to transfer the QC sample container to the laboratory instrument. Exemplarily, causing the quality of the clinical test of the laboratory analyzer to be monitored by using a QC sample container of the set of QC sample containers comprises instructing the laboratory analyzer to carry out the clinical test on at least a portion of the QC material comprised in that QC sample container. In particular, causing the quality of the clinical test of the laboratory analyzer to be monitored by using a QC sample container of the set of QC sample containers initiating the monitoring of the quality of the clinical test of the laboratory analyzer e.g., by instructing the ALS and/or the laboratory analyzer as described above.

Causing the quality of the clinical test of the laboratory analyzer to be monitored by using a QC sample container of the set of QC sample containers may comprise monitoring, e.g., by the ALS and/or the laboratory analyzer to monitor the quality of the clinical test of the laboratory analyzer by using the QC sample container of the set of QC sample containers.

For example, monitoring the quality of the clinical test of the laboratory analyzer by using the QC sample container of the set of QC sample containers may be carried out when certain criteria are met. For example, the monitoring may be triggered after the laboratory analyzer has carried out the clinical test on a specific number of biological samples, when a predetermined time has passed since the last QC check, or when a specific time or date is reached. The initiation of the monitoring may be based on a result of a statistical analysis that indicates that a quality control check is necessary or may be initiated in response to an input from a user, such as a laboratory technician requesting a test. These various triggers ensure that the monitoring is consistent and responsive to the needs of both the testing schedule and the reliability of the laboratory equipment.

At least a portion of the QC data may be obtained from a middleware software module.

At least a portion of the QC data may be determined by the middleware software module.

The biological sample testing schedule may be generated, e.g., automatically and/or based on an external user input. In particular, the middleware software module may determine the QC data by using the biological sample testing schedule, such that the biological sample testing schedule is prioritized, i.e. over the QC schedule. In particular, the middleware software module may determine the QC schedule based on the biological sample testing schedule, i.e. such that the biological sample testing schedule is prioritized over the QC schedule. The middleware software module may be stored and run on the computing device or may be stored and may run on a further computing device.

Exemplarily, the computing device determines the QC schedule based on the biological sample testing schedule and based on the QC data obtained from the middleware software module, i.e. such that the biological sample testing schedule is prioritized over the QC schedule. In particular, the middleware software module may be responsible for creating the QC data and optionally also the QC schedule. This QC schedule may be designed to fit around the biological sample testing schedule, ensuring that testing biological samples of subjects takes priority over quality control procedures. For example, the middleware software module may plan QC checks when the workload of the ALS is relatively low so that those QC checks will not interfere or will not substantially interfere with the testing of biological samples of subjects. This way, that testing is not delayed or disrupted by QC processes, which can be performed when the workload of the ALS is relatively low.

In particular, the computing device may also help managing when and how the QC data is obtained and processed. For example, if the middleware software component determines that a QC check on the clinical tests should be carried out after a predetermined number of clinical tests carried out on biological samples of individuals, the computing device may handle the specifics to make sure that the analyser timely runs the necessary QC checks.

A second aspect of the present disclosure relates to a computing device (i.e., a data processing system) comprising a processor configured to carry out the method according to the first aspect of the present disclosure. For example, the computing device may further comprise at least one memory storing computer-executable instructions which, when executed by the processor cause the computing device and/or its processor to carry out the method according to the present disclosure.

The processor (or processing unit) may be a component of electronic devices that may be responsible for carrying out computational tasks. There may be different types of processing units, each designed for specific purposes. A processing unit may be or may comprise a Central Processing Unit (CPU), Graphics Processing Unit (GPU), Digital Signal Processor (DSP), Field-Programmable Gate Array (FPGA), and/or Application-Specific Integrated Circuit (ASIC).

A third aspect of the present disclosure relates to an automated laboratory system, ALS, comprising the computing device according to the second aspect of the present disclosure, as described herein and/or configured to carry out the method according to the present disclosure.

A fourth aspect of the present disclosure relates to a computer program product comprising instructions which, when the program is executed by a computer system, cause the computer system to carry out the method according to the present disclosure.

The computer system may be the computing device or a part of the computing device according to the second aspect of the present disclosure.

A fifth aspect of the present disclosure relates to a computer-readable medium, e.g., a non-transitory computer-readable medium, comprising instructions which, when executed by a computer system, cause the computer system to carry out the method according to the first aspect of the present disclosure.

In case the method comprises any steps (for example physical) which go beyond a mere data processing operation (for example processing the sample container), the computer program or computer-readable medium may further comprise computer-readable instructions which when executed by a data processing system or by computing device cause the ALS (or any elements or components of the ALS) to carry out these steps.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive for the scope as defined by the accompanied claims.

The accompanying drawings, which are incorporated in and constitute a part of this specification, illustrate examples of the disclosure and together with the description, and serve to support and illustrate the principles thereof.
Fig. 1 shows a schematic representation of a computing device and a schematic representation of an automated laboratory system.
Fig. 2 shows a flowchart of an exemplary method 400 for causing the preparation of a set of QC sample containers.
Fig. 3 shows a flowchart of a further exemplary method 500, for causing the preparation of a set of QC sample containers.
Fig. 4 shows an exemplary flowchart comprised in the step of obtaining the QC data.
Fig. 5 shows a flowchart of a further exemplary method 600 for causing the preparation of a set of QC sample containers.

In the following text, a detailed description of examples will be given with reference to the drawings. Various modifications to the examples may be made. In particular, one or more elements of one example may be combined and used in other examples to form new examples.

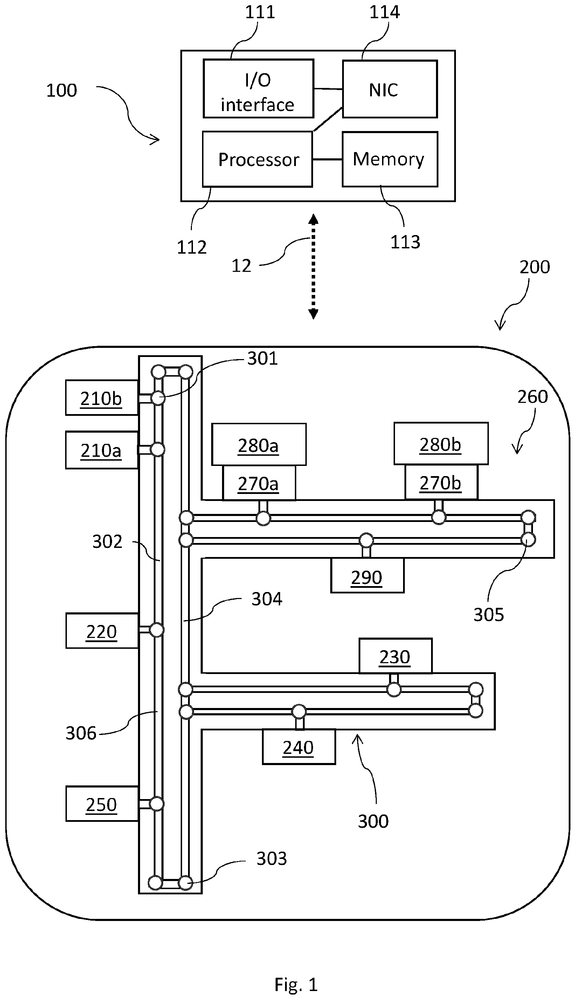

**Fig. 1** shows a schematic representation of a computing device and a schematic representation of an automated laboratory system, ALS, that may be used in some examples of the present disclosure.

The computing device 100 and the automated laboratory system (ALS) 200 may be part of a laboratory. The computing device 100 may include an input/output (I/O) interface 111, a processor 112, a memory 113, and a network interface controller 114. One or more peripheral (input or output) devices (not shown) may be connectable to the input/output interface 111. The peripheral input devices may include one or more of the following: a computer keyboard and/or a pointing device, such as a mouse. The peripheral output devices may include one or more of the following: a terminal, a printer, a disk drive or other storage device, and a video monitor. The processor 112 may include a central processing unit (CPU) and/or a graphics processing unit (GPU), each having one or more processing cores. The memory 113 may include primary memory, such as random access memory (RAM), read-only memory (ROM) or flash memory, and/or secondary memory, such as a solid-state drive or a hard disk drive.

The network interface controller 114 may be connectable to a computer network 12. The ALS 200 may also be connectable to the computer network 12. In some cases, the computing device 100 may be included in (i.e., may be part of) the ALS 200.

The ALS 200 may include a plurality of components. For instance, the ALS 200 comprises a plurality of pre-processing instruments 210a, 210b, 220. In particular, the ALS comprises one or a plurality, e.g., two, input modules 210a, 210b. Each of the input modules 210a 210b may comprise a respective decapper for decapping sample containers (not shown) and/or at least a respective centrifuge for centrifuging sample containers (not shown). In some examples, at least an input module does not comprise a recapper and/or one of the pre-processing instruments of the ALS is a recapper. In particular, the centrifuge may be configured to centrifuge a sample container, e.g., when receiving a respective instruction from the computing device 100. Alternatively, each input module of the plurality of input modules 210a, 210b may be associated with a respective centrifuge (not shown) which is mechanically connected with that input module such that sample containers may be transferred from that input module and the respective centrifuge and vice versa. The ALS 200 may comprise an aliquoter 220. The aliquoter is configured to aliquote a portion of a biological sample contained in a first sample container into one or several second sample containers. In particular, the aliquoter 220 may be configured to carry out the aliquoting, when receiving a respective instruction from the computing device 100. In some cases, at least an input module of the plurality of modules 210a, 210b may comprise two or more centrifuges. Exemplarily, at least one input module of the plurality of modules 210a, 210b does not comprise any centrifuge. In some examples, one of the pre-processing instruments of the ALS is a centrifuge.

Each input module of the plurality of the input modules 210a, 210b may comprise a respective loading area (not shown) for loading sample containers (not shown) in the ALS 200 and for identifying said containers. Moreover, each input module of the plurality of input modules 210a, 210b may comprise a respective distribution buffer (not shown), where sample containers may be positioned before being transferred on a transportation component, e.g., on a track or a belt, to be moved within the ALS 200 for processing.

The ALS 200 comprises one or more processing instruments, i.e., analyzers, 230, 240, 250 for performing tests with a biological sample of a subject, e.g. a patient, contained in sample containers (not shown). For example, the ALS 200 comprises a clinical chemistry analyzer 230, an immunoassay analyzer 240 and a hematology analyzer 250. The ALS 200 may also include more or less of these components. For instance, the ALS 200 may comprise a plurality of clinical chemistry analyzers, a plurality of immunoassay analyzers, and/or a plurality of hematology analyzers. The ALS 200 may comprise further analyzers, e.g., one or more urinalysis analyzers (not shown) and/or one or more microbiology analyzers (not shown). The ALS 200 may include one or more identification and antibiotic susceptibility analyzers, one or more bacteriology analyzers, and/or one or more molecular analyzers.

Quality control (QC) checks may be may regularly performed on the clinical tests that the processing instruments, i.e., analyzers, 230, 240, 250, are configured to carry out. In particular, those checks are carried out using QC sample containers containing a QC material with known characteristics. In particular, the QC sample containers may have the same form or similar form as sample containers containing biological samples of subjects, e.g. of patients.

When the QC material is processed by the laboratory analyzer, the analyzer may measure the characteristics (such as the concentration of specific analytes) and compares the measured values to the known target values of the QC material. If the analyzer results fall within the acceptable range or tolerance of the predefined values, it confirms that the analyzer is working properly. However, if the results deviate significantly from the expected range, it may indicate a problem with the instrument, such as calibration issues, sensor drift, or hardware malfunction. By using QC materials with known characteristics, laboratories can systematically monitor the performance of their instruments and ensure they are producing reliable results.

The ALS 200 further comprises a plurality of post-processing instruments 270a, 270b, 280a, 280b, 290. In particular, the ALS may comprise a plurality of, e.g., two, recappers 270a, 270b for recapping sample containers and a plurality of, e.g., two, storage units 280a, 280b for storing sample containers. In particular, each recapper 270a, 270b is associated with a respective storage unit 280a, 280b. For example, the recapper 270a and the recapper 270b are associated with the storage unit 280a and the storage unit 280b, respectively. In particular, a recapper associated with a storage unit is mechanically connected with that storage unit such that sample containers may be transferred from that input module and the respective centrifuge and vice versa.

Alternatively, a storage unit of the ALS 200 may comprise a respective recapper associated therewith. A storage unit of the ALS 200 may further comprise a respective storage space (not shown) for storing a plurality of sample containers. The storage space may have several slots (e.g. one slot for one sample container). For example, a sample container may be recapped and then placed in a storage space (i.e., a particular slot) of a storage unit.

The above-mentioned instruments 210a, 210b, 220, 230, 240, 250, 270a, 270b, 280a, 280b, 290 may be (at least indirectly) mechanically connected with each other via a transportation system 300 such that a sample container may be transferred from any of the above-mentioned instruments 210a, 210b, 220, 230, 240, 250, 270a, 270b, 280a, 280b, 290 to any other instrument 210a, 210b, 220, 230, 240, 250, 270a, 270b, 280a, 280b, 290 by means of the transportation system 300.

Specifically, the transportation system 300 includes a plurality of transport components 301, 302. In particular, the transport system may comprise a plurality of diverters 301, 303, 305 and a plurality of tracks and/or belts, 302, 304, 306. A diverter 301, 303, 305 is in particular a mechanical device which allows to transfer a sample container from a track and/or belt to another track and/or belt. In particular, a diverter, depending on the path that a sample container shall follow, allow for changing the direction of motion of said sample container. In Fig. 1, diverters are schematically depicted by white circles 301, 303, 305.

The transportation system 300 comprises a plurality of tracks and/or belts 302, 304, 306 for transporting sample containers e.g., in container carriers (not shown). In Fig. 1 tracks and/or belts are schematically depicted by white rectangles 302, 306 comprised between two diverters and white rectangles 304 comprised between a diverter and an instrument. In particular, the transport components are configured to move sample containers within the ALS 200. The transport components are only schematically indicated in fig. 1. The transportation system 300 may comprise more or less transport components. For example, the transportation system 300 may comprise one or more robotic grippers (not shown) and/or one or more container carriers (not shown).

The transportation system 300 may further comprise at least one buffer region (not shown) configured to temporarily store one or more of sample containers. The buffer region may be mechanically connected with any one of the instruments 210a, 210b, 220, 230, 240, 250, 270a, 270b, 280a, 280b, 290 of the ALS 200 such that a sample container may be transferred from any of the above-mentioned instruments to the buffer region by means of the transport components of the transportation system 300.

A sample container may thus be transferred along a determined path from an input module 210a, 210b to one of the storage units 280a, 280b, in particular along a determined path. In particular, a path comprises one or more of the instruments 220, 230, 240, 250, and a plurality of the transportation components. The plurality of transportation components allows the sample container to travel in the instruments comprised in said path so that said instruments may pre-process, post-process and/or process the biological sample contained in the sample container. Alternatively, or additionally, the path may comprise a plurality of transportation components that allows the sample container to travel in the vicinity of one or more instruments that are not comprised in the route, so that said instruments are able to retrieve and at least a portion of the biological sample contained in the sample container, and pre-process, process and/or post process said portion.

In some examples, the computing device may be comprised, e.g., be a part of the ALS.

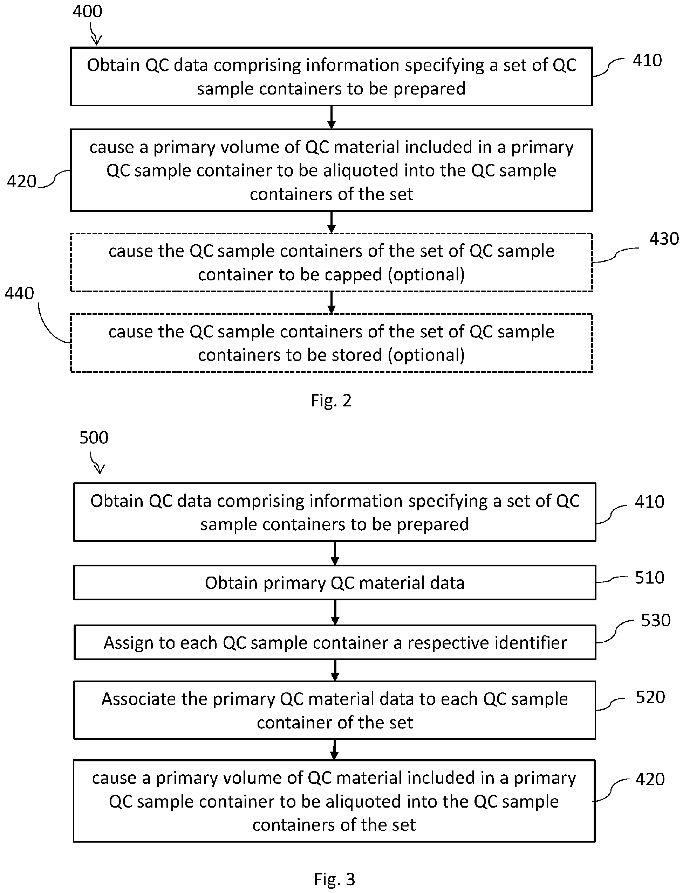

**Fig. 2** shows a flowchart of an exemplary method 400 for causing the preparation of a set of QC sample containers. Each QC sample container comprises a QC material for controlling the quality of at least a clinical test of a laboratory analyzer.

The method may be carried out by a computing device, e.g., it may be a computer implemented method, and in particular by the computing device 100 schematically depicted in fig. 1 and described above.

Step 410 of the method comprises obtaining, by the computing device, QC data comprising information specifying a set of QC sample containers to be prepared.

The QC data may further comprise information specifying, for each QC sample container of the set of QC sample containers, a respective volume of the QC material to be included in said each QC sample container.

The QC data may be obtained by receiving the QC data or by determining the QC data. For example, the QC data may be received from an external computing device or software module (e.g. a middleware software module), e.g., external to the computing system 100 of fig. 1. Receiving the QC data may comprise accessing a computer memory or a database, e.g. of the external computing device, and retrieving said data therefrom. Retrieving the data may comprise downloading the data. The retrieved data may be stored in the memory 113 of the computing device 100 and hence be made accessible for the further steps of the method. Exemplarily, the computing device 100 is informed by the external computing device or software module that QC data are available. In response, the computing device 100 may obtain the QC data e.g., by downloading them.

Obtaining QC data may comprise determining the QC data. For example, the computing device 100 may determine the set of QC sample containers to be prepared and, for each QC sample container of the set of QC sample containers, a respective volume of the QC material to be included in said each QC sample container.

For example, the computing device may obtain (e.g., download, access, and/or receive) information (e.g. from an external computing device or software module) which specifies the number of QC checks that shall be carried out in a specified time period on the clinical test. Based on said information, the computing device 100 may determine the cardinality of the set of QC sample containers (i.e., the number of QC sample containers which are to be prepared). Moreover, the computing device may obtain, for each QC sample container of the set of sample containers, a respective number of QC checks which should be performed on the clinical test by using the QC material in that QC sample container. For each QC sample container of the set of sample containers, the computing device 100 may then determine, based on the respective number of QC checks and the volume of QC material needed to carry out one QC check, a respective volume of the QC material to be included in said each QC sample container.

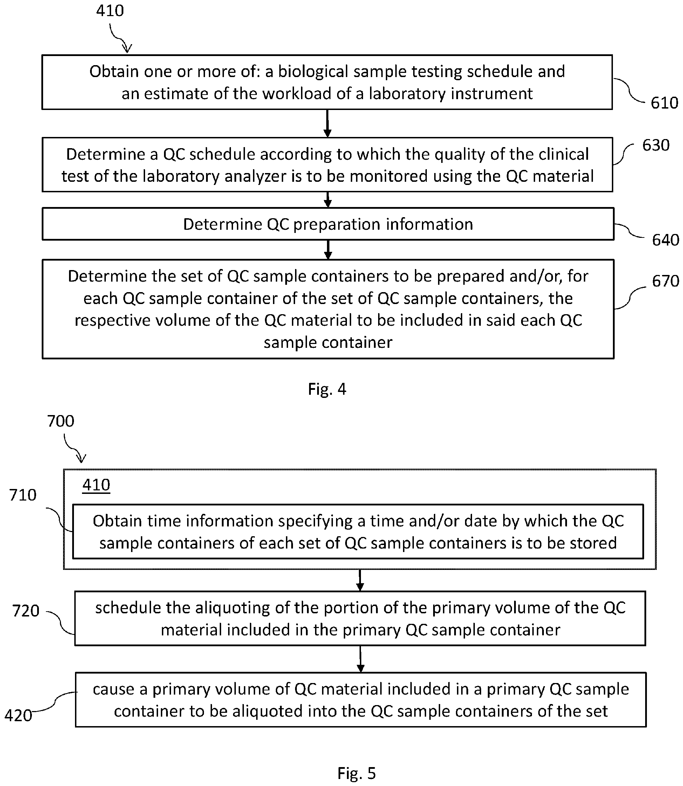

**Fig. 4** shows an exemplary flowchart comprised by the step 410 of fig. 2. In particular, step 410 may comprise obtaining 610, by the computing device 100, one or more of: (i) a biological sample testing schedule according to which the clinical test of the laboratory analyzer is to be carried out on biological samples of subjects and (ii) an estimate of the workload of the laboratory instrument. Obtaining one or more of (i) and (ii) may comprise receiving and/or determining said one or more of (i) and (ii). For example, said one or more of (i) and (ii) may be received from an external computing device or software module.

Obtaining the biological sample testing schedule may comprise generating that schedule, e.g., automatically and/or based on an external user input.

The estimate of the workload of the laboratory instrument, e.g., of the clinical test of the laboratory instrument, may specify how the workload of the laboratory instrument, e.g., of the clinical test of the laboratory instrument is expected to vary in a given time period (e.g., a given day of the week, a week, a month, and the like). For example, the estimate of the workload may be determined by the computing device 100 or may be determined and provided by an external computing device or software module. The estimate of the workload of the laboratory instrument, e.g., of the clinical test of the laboratory instrument, may be determined by using historical data of the workload of the laboratory instrument, e.g., of the clinical test of the laboratory instrument in the given time period. In particular, obtaining 610, by the computing device 100, the estimate of the workload of the laboratory instrument may comprise determining that estimate, e.g., as described above.

Step 410 may comprise determining 630, by the computing device 100, a QC schedule according to which the quality of the clinical test of the laboratory analyzer is to be monitored using the QC material. In some examples, the QC schedule may be based on the biological sample testing schedule, such that the biological sample testing schedule is prioritized over the QC schedule. For example, the biological sample testing schedule may be prioritized over the QC schedule to reduce or avoid disruption of the testing of biological samples of subjects. Accordingly, the QC schedule may be such that no QC checks are carried out in the time intervals in which, according to the biological sample testing schedule, biological samples of subjects are to be tested. For example, if a laboratory plans to run the clinical test on biological samples of subjects at specific times throughout the day, such as in the morning and afternoon, the QC checks may be scheduled around these testing times. Exemplarily, the QC schedule may be based on an estimate of the workload of the laboratory instrument, e.g., of the clinical test of the laboratory instrument. For example, the QC schedule may be determined such that the QC checks are planned in time periods in which the workload of the ALS is expected to be relatively low so that those QC checks will not interfere or will not substantially interfere with the testing of biological samples of subjects. This way, that testing is not delayed or disrupted by QC processes, which can be performed when the workload of the ALS is relatively low. In particular, in this way, the workload of the laboratory instrument can be balanced over time, i.e. to avoid peaks as far as possible.

Step 410 may comprise determining 640, by the computing device 100, QC preparation information. The QC preparation information specifies the preparation of each set of QC sample containers. The QC preparation information may be determined based on the QC schedule determined at step 630 and on the QC data. In particular, the QC preparation information may specify one or more of: the frequency at which the quality of the clinical test of the laboratory analyzer is to be monitored using the QC material, the QC schedule according to which the quality of the clinical test of the laboratory analyzer is to be monitored using the QC material, the laboratory analyzer, and the clinical test of the laboratory analyzer.

Step 410 may further comprise determining 670, by the computing device 100 using the QC preparation information, the set of QC sample containers to be prepared and/or, for each QC sample container of the set of QC sample containers, the respective volume of the QC material to be included in said each QC sample container.

With reference to fig. 2, at step 420, a primary volume of QC material included in a primary QC sample container is caused to be aliquoted, based on the QC data, into the QC sample containers of the set of sample containers.

For example, causing QC material to be aliquoted may comprise transmitting, e.g. by the computing device 100, a set of instructions to an aliquoter (e.g. aliquoter 220) of the ALS 200. Said set of instructions may instruct the aliquoter to aliquot the portion of the primary volume of QC material into the QC sample containers of the set of QC sample containers. This way, the computing device may cause the aliquoter to carry out the respective aliquotation. For instance, based on the received instructions, the aliquoter 220 may aliquot that portion of the primary from the primary QC sample container into the QC sample containers of the set of sample containers.

Exemplarily, causing QC material to be aliquoted may comprise aliquoting, by the aliquoter 220, the primary volume of QC material into the QC sample containers. In other words, step 420 may comprise both instructing , by the computing device 100, the aliquoter to carry out the aliquotation and carrying out, by the aliquoter 220, the aliquotation.

For example, causing QC material to be aliquoted may comprise sending, by the computing device 100, a set of instructions to the ALS to move the primary sample container to the aliquoter 220. For example, the primary sample container may be inserted (e.g. manually) into the ALS via an input module 210a, 210b and, based on the set of instructions, moved by the transportation system 300 to the aliquoter 220. Optionally, the primary sample container may be stored temporarily in a storage unit and, based on the set of instructions, moved from there to the aliquoter 220 e.g., via the transportation system 300. The set of instructions may for instance comprise identification data of the primary sample container, said data comprising information to uniquely and unambiguously identify the primary sample. The identification data may be comprised in an identifier, such as a barcode, QR code, or RFID tag, which is physically attached to or integrated into the primary QC sample container.

The computing device may send a set of instructions to the aliquoter 220 of the ASL to carry out the aliquoting task. That set of instructions may specify the number of QC sample containers into which the portion of the primary volume of QC sample is to be aliquoted and for each container of those QC sample containers and the amount of QC material that is to be transferred into said each container.

After receiving the instructions from the computing device, the aliquoter 220 may aliquot the portion of the primary volume of QC material into the QC sample containers of the set of sample containers. For example, for each sample container of the set of sample containers, the aliquoter may aspirate the respective volume of the QC material to be included in said each QC sample container take the specified volume from the primary QC sample container and distributes it into said QC sample containers, following the amounts defined in the QC data. This step may be automated and allows for precise aliquoting across all containers.

At optional step 430, the QC sample containers of the set of QC sample container may be caused to be capped.

Causing the QC sample containers of the set of QC sample container to be capped may comprise instructing, by the computing device 100, a recapper 270a, 270b to cap the QC sample containers of the set of QC sample containers. Exemplarily, causing the QC sample containers of the set of QC sample container to be capped may comprise capping, by the recapper 270a, 270b, the QC sample containers of the set of QC sample containers.

For instance, causing the QC sample containers to be capped may comprise transmitting, by the computing device, a set of instructions to a recapper of the ALS. For instance, the set of instructions may specify the QC samples containers that are to be recapped. In response, the recapper may recap the QC sample containers. This way, the computing device may cause the recapper to carry out the respective capping task.

Optionally, the computing device may send a set of instructions to the ALS to move the QC samples containers to the recapper.

At optional step 440, the QC sample containers of the set of QC sample containers may be caused to be stored in one or more storage units, e.g. storage units. 280a, 280b.

In particular, causing the QC sample containers of the set of QC sample containers to be stored may comprise instructing, by the computing device 100, the automated laboratory system to store the QC sample containers in the one or more storage units. In particular, causing the QC sample containers of the set of QC sample containers to be stored may comprise storing, by the automated laboratory system, the QC sample containers of the set of QC sample containers in the one or more storage units.

For example, the computing device 100 may transmit a set of instructions to the ALS to store the QC sample containers in one or more of the storage units 280a and 280b. In response, the ALS may move, in particular using the transportation system 300, the capped QC sample containers to the one or more storage units. Causing the QC sample containers to be stored may comprise selecting, by the computing device, the one or more storage units among a plurality of storage units 280a, 280b. Selecting the one or more storage units may be based on the availability of each storage unit of the plurality of storage units. The selection may also be based on the QC data, e.g. on the storage conditions of the QC material, as specified by the QC data.

Accordingly, the computing device may cause the ALS to carry out the task storing the CC sample containers. In particular, the set of instructions may comprise information specifying, for each QC sample container of the set of sample containers, a respective storage unit of the one or more storage units, in which that QC sample container is to be stored.

**Fig. 3** shows a flowchart of a further exemplary method 500 for causing the preparation of a set of QC sample containers.

The method 500 may comprise step 410, as schematically shown in figs. 2, 4 and 5 and as described above.

The method may comprise a step 510 of obtaining primary QC material data. For example, the primary QC material data may be obtained using the QC data obtained in step 410 of the method of fig. 2. The primary QC material data may comprise various information about the characteristics of the QC material, such as: information specifying a type of QC material included in the primary QC sample container, information specifying a concentration level of an analyte in the QC material included in the primary QC sample container, information specifying a lot of the QC material, e.g., of the QC material comprised in the primary QC sample container, information specifying a preparation date of the QC primary sample container, and information specifying an expiration date of the QC material included in the primary QC sample container.

Step 510 may comprise accessing identification data from an identifier of the primary QC sample container. In particular, the identification data may be included in an identifier comprised in the primary QC sample container. The identification data may uniquely identify the primary QC sample container and/or the QC sample comprised in the primary QC sample container. The identification data may be comprised in an identifier, such as a barcode, QR code, or RFID tag, which is physically attached to or integrated into the primary QC sample container.

For example, the computing device may send a set of instructions to a scanner of the ALS (not shown in fig. 1) to scan the identifier attached to or integrated in the primary QC sample container. In response, the scanner may transmit the scanned information, i.e. the identifier to the computing device. This identifier may be unique to the primary QC sample container and/or may serve to access the information about that container and/or the QC material comprised in that container. In particular, the identifier may uniquely and unambiguously link the primary QC sample container with the primary QC material data, e.g. the latter data being stored in a computer memory of database of an external computing system.

Step 510 may comprise accessing primary QC material data by using the identification data. For example, by scanning the identifier using e.g. the scanner described above, the computing device may be able to retrieve the identification data and, based on said identification data, retrieve the primary QC material data, e.g. by downloading the primary QC material data from the external computing device. The identification data may thereby serve to identify the primary QC material data which correspond to the QC material contained in the primary QC sample container. The retrieved primary QC material data may e.g. be stored in the computer memory 113 of the computing device 110 and thus be accessible by the computing device.

In some exemplary methods, step 410 may comprise step 510. In particular, the QC material data may also be comprised in the QC data. In those exemplary methods, obtaining QC data may comprise retrieving, based on the QC data, the primary QC material data, e.g. from the external computer device or software module. In some further exemplary methods, step 410 is carried out after step 510.

At step 530, a respective identifier may be assigned to each QC sample container of the set of QC sample containers. Assigning to each QC sample container the respective identifier may comprise determining, for each QC sample container of the set of QC sample containers, the respective identifier.

The respective identifier associated with a QC sample container of the set may comprise a main identifier and a respective suffix and/or a respective prefix, e.g., the main identifier being the identifier comprised in, attached to, and/or integrated in the primary QC sample container. In one example, the main identifier may be similar for each QC sample container of the set and may correspond to the identifier of the primary QC sample container. However, in order to be able to distinguish the QC sample containers of the set from each other, their respective suffices and/or a respective prefixes may differ from each other. The respective identifier may be comprised in a respective indicium, such as a respective barcode, a respective QR code, or a respective RFID tag. In particular, the respective indicium may be comprised in, attached to, and/or integrated in that each QC sample container.

For example, the computing device, may generate the respective identifier and send a set of instructions to a printer (not shown in fig. 1) to print the respective barcode and/or the respective QR code and to attach the respective barcode and/or the respective QR code to that QC sample container. In response, for each QC sample container of the set of sample containers, the printer may print the respective barcode and/or the respective QR code and attach the respective barcode and/or the respective QR code to that QC sample container.

In some exemplary methods, step 530 may be carried out before step 510. Moreover, step 510 may comprise step 530 and/or 520.

At step 520, the primary QC material data may be associated, by the computing device, to each QC sample container of the set of QC sample containers. In particular, associating to each QC sample container of the set of QC sample containers the primary QC material data may comprise storing in a database a link to the retrieved QC material data, as stored in the computer memory 113 of the computing device 100. For example, the database storing the link is such that, for each QC sample container of the set of QC sample containers, that link may be accessed by using the respective identifier assigned to that QC sample container and comprised in the indicium of that QC sample container. In particular, when a QC sample container of the set of sample containers is scanned, the ALS and/or the computing device may retrieve the respective identifier assigned to that QC sample container and access the primary QC material data e.g. be stored in the computer memory 113, in particular in a database.

In some exemplary methods, steps 520 and 530 may be carried out after step 420. In some further exemplary methods, step 520 and/or step 530 are comprised in step 420.

The method 500 may comprise step 420, as schematically shown in fig. 2 and described above. Further, the method 500 may comprise one or more or steps 430 and 440, as schematically shown in fig. 2 and described above.

**Fig. 5** shows a flowchart of a further exemplary method 700 for causing the preparation of a set of QC sample containers. The method 700 comprises the step of obtaining QC data comprising information specifying the set of QC sample containers to be prepared 410, as depicted in figs. 2, 3 and 4 and as described above. Step 410 may comprise obtaining 710, by the computing device 100, time information, that information specifying a time and/or date (e.g., a deadline) by which the QC sample containers of each set of QC sample containers is to be stored in one or more storage units.

For example, the time information is comprised in the QC data. If this is the case, for instance, obtaining 710 time information may comprise accessing the QC data stored, e.g., in the memory 113 of the computing device, and retrieving that information from the QC data. In particular, the time information may be determined based on the QC schedule (cf. step 630 described above), e.g. such that the QC sample containers of the set of sample containers are stored in the storage unit in time, i.e. before they are required according to the QC schedule.

The method 700 comprises scheduling 720, by the computing device according to the time information, the aliquoting of the portion of the primary volume of the QC material included in the primary QC sample container and, optionally, one or more of: capping the QC sample containers of the set of QC sample containers, and storing the QC sample containers of the set of QC sample containers in the one or more storage units. For instance, aliquoting the portion of the primary volume of the QC material, capping the QC sample containers, and storing the QC sample containers may be scheduled in such a way that they are carried out so that the QC sample containers are ready and stored by the required deadline as specified by the time information.

The method 700 comprises step 420 as schematically shown in figs. 2 and 3 and as described above. In particular, the computing device 100 may instruct the ALS 200 and the aliquoter 220 to aliquot the portion of the primary volume of the QC material according to the scheduling carried out at step 720.

For instance, the method 700 may comprise optional step 430 as schematically shown in fig. 2 and as described above. In particular, the computing device 100 may instruct the ALS 200 and one of the one or more recappers 270a, 270b to cap the QC sample containers of the set of QC sample containers according to the scheduling carried out at step 720.

Exemplarily, the method 700 may comprise optional step 440 as schematically shown in fig. 2 and as described above. In particular, the computing device 100 may instruct the ALS 200 to store the QC sample containers of the set of QC sample containers in one or more storage units 280a, 280b according to the scheduling carried out at step 720.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A method for causing the preparation of a set of Quality Control, QC, sample containers, wherein each QC sample container comprises a QC material for controlling the quality of at least a clinical test of a laboratory analyzer, the method comprising:
• obtaining, by a computing device, QC data comprising information specifying a set of QC sample containers to be prepared and, for each QC sample container of the set of QC sample containers, a respective volume of the QC material to be included in said each QC sample container; and
• causing at least a portion of a primary volume of QC material included in a primary QC sample container to be aliquoted, based on the QC data, into the QC sample containers of the set of QC sample containers.

2. The method of claim 1, wherein causing the portion of the primary volume of QC material included in the primary QC sample container to be aliquoted comprises one or more of:
• instructing, by the computing device, an aliquoter to aliquot, based on the QC data, the portion of the primary volume of QC material included in the primary QC sample container into the QC sample containers of the set of QC sample containers; and
• aliquoting, by the aliquoter and based on the QC data, the portion of the primary volume of QC material included in the primary QC sample container into the QC sample containers of the set of QC sample containers.

3. The method of claim 1 or 2, further comprising causing the QC sample containers of the set of QC sample container to be capped.

4. The method according to any one of the preceding claims, further comprising causing the QC sample containers of the set of QC sample containers to be stored in one or more storage units.

5. The method according to any one of the preceding claims, further comprising:
• obtaining, by the computing device, primary QC material data, wherein the primary QC material data comprise information specifying one or more of:
∘ a type of QC material included in the primary QC sample container,
∘ a concentration level of an analyte in the QC material included in the primary QC sample container,
∘ a lot of the QC material,
∘ a preparation date of the QC primary sample container, and
∘ an expiration date of the QC material included in the primary QC sample container,
• associating, by the computing device, the primary QC material data to each Qc sample container of the set of QC sample containers.

6. The method according to the preceding claim, wherein
obtaining the primary QC material data comprises accessing identification data, the identification data being included in an identifier comprised in the primary QC sample container and uniquely identifying the primary QC sample container and/or the QC sample comprised in the primary QC sample container, and accessing at least a portion of the QC material data by using the identification data.

7. The method according to any one of the preceding claims, further comprising:
causing the primary QC sample container to be transferred to an aliquoter.

8. The method according to any one of the preceding claims, further comprising causing the preparation, according to a preparation schedule, of a plurality of sets of QC sample containers, wherein each QC sample container of each set of the plurality of sets of QC sample containers comprises a respective portion of the QC material for controlling the quality of the at least a clinical test of the laboratory analyzer, wherein the plurality of sets of QC sample containers comprises the set of QC sample containers.

9. The method according to any one of the preceding claims, wherein
the QC data comprises time information, the time information specifying a time and/or date by which the QC sample containers of the set of QC sample containers is to be stored in the one or more storage units,
wherein the method comprises scheduling, by the computing device according to the time information, one or more of: aliquoting the portion of the primary volume of the QC material included in the primary QC sample container, capping the QC sample containers of the set of QC sample containers, and storing the QC sample containers of the set of QC sample containers in the one or more storage units.

10. The method according to any one of the preceding claims, wherein obtaining the QC data comprises determining, by using QC preparation information, the set of QC sample containers to be prepared and/or, for each QC sample container of the set of QC sample containers, the respective volume of the QC material to be included in said each QC sample container,
wherein the QC preparation information specifies one or more of:
∘ a frequency at which the quality of the clinical test of the laboratory analyzer is to be monitored using the QC material,
∘ a QC schedule according to which the quality of the clinical test of the laboratory analyzer is to be monitored using the QC material,
∘ the laboratory analyzer, and
∘ the clinical test of the laboratory analyzer.

11. The method according the preceding claim, wherein the QC schedule is based on one or more of: a biological sample testing schedule according to which the clinical test of the laboratory analyzer is to be carried out on biological samples of subjects, and an estimate of a workload of the laboratory instrument..

12. The method according to any one of the preceding claims, further comprising causing the quality of the clinical test of the laboratory analyzer to be monitored by using a QC sample container of the set QC of sample containers.

13. A computing device comprising a processor configured to carry out the method according to any one of the preceding claims.

14. A computer program product comprising instructions which, when the program is executed by a computer system, cause the computer system to carry out the method according to any one of the method claims.

15. A computer-readable medium comprising instructions which, when executed by a computer system, cause the computer system to carry out the method according to any one of the method claims.
